Europäisches Patentamt

European Patent Office

Office européen des brevets

(19)

(11) Veröffentlichungsnummer: **0 354 540**

**A2**

(12) **EUROPÄISCHE PATENTANMELDUNG**

(21) Anmeldenummer: **89114669.8**

(22) Anmeldetag: **08.08.89**

(51) Int. Cl.⁴: **B23B 31/02 , B23Q 7/04**

(30) Priorität: **11.08.88 DE 3827316**

(43) Veröffentlichungstag der Anmeldung:
**14.02.90 Patentblatt 90/07**

(84) Benannte Vertragsstaaten:
**AT DE FR GB IT SE**

(71) Anmelder: **Traub AG**
**Ulmer Strasse 49-55**
**D-7313 Reichenbach/Fils(DE)**

(72) Erfinder: **Sonnek, Werner**
**Brunnenwiesenweg 33**
**D-7061 Lichtenwald(DE)**
Erfinder: **Sahm, Detlef**
**Fürstenstrasse 45**
**D-7313 Reichenbach/Fils(DE)**

(74) Vertreter: **Goetz, Rupert, Dipl.-Ing. et al**
**Patent- und Rechtsanwälte Wuesthoff &**
**Wuesthoff Schweigerstrasse 2**
**D-8000 München 90(DE)**

(54) Einrichtung zum automatischen Wechseln von Werkstück-Spann-mittlen an numerisch gesteuerten Drehmaschinen.

(57) Einer Werkstückspindel (3) sind zwei oder mehr Spannmittel (10), beispielsweise Spannzangen, unterschiedlicher Größe zugeordnet. An einem Kreuzschlittensystem (23, 27) ist ein Greifer (16) zum Erfassen jeweils eines Spannmittels (10) und zum Herstellen und Lösen seiner Befestigung an der Werkstückspindel (3) angeordnet. Zum Aufbewahren der jeweils nicht benutzten Spannmittel (10) ist im Arbeitsbereich des Kreuzschlittensystems (23, 27) ein Spannmittel-Magazin (34) vorgesehen. Alle für den Transport der Spannmittel (10) vom Spannmittel-Magazin (34) zur Werkstückspindel (3) und umgekehrt erforderliche Bewegungen sind vom Kreuzschlittensystem (23, 27) ausführbar. Dadurch werden Kosten und Platz für ein externes Handhabungssystem zum Auswechseln der Spannmittel (10) eingespart.

Fig. 2

# Einrichtung zum automatischen Wechseln von Werkstück-Spannmitteln an numerisch gesteuerten Drehmaschinen

Die Erfindung betrifft eine Einrichtung zum automatischen Wechseln von Werkstück-Spannmitteln an numerisch gesteuerten Drehmaschinen mit
- mindestens einer Werkstückspindel, der ein Spannmittelträger dauerhaft zugeordnet ist,
- mindestens zwei Spannmitteln, die für Werkstükke unterschiedlicher Größe vorgesehen und einander abwechselnd am Spannmittelträger zu befestigen sind,
- einem Spannmittel-Magazin zum Aufbewahren mindestens eines nichtbenutzten Spannmittels,
- mindestens einem Kreuzschlittensystem mit einem in Richtung der Werkstückspindel verfahrbaren Z-Schlitten und mindestens einem quer dazu verfahrbaren X-Schlitten,
- Schlittenführungen, die einen Arbeitsbereich des Kreuzschlittensystems definieren, und
- mindestens einem Greifer zum Erfassen eines Spannmittels und zum Herstellen und Lösen seiner Befestigung am Spannmittelträger.

Werkstückspindeln von numerisch gesteuerten Drehmaschinen können mit Spannmitteln unterschiedlicher Art ausgerüstet sein, deren Gestaltung und Wirkungsweise von Art, Form und Größe der zu bearbeitenden Werkstücke abhängt. Drehmaschinen zum Verarbeiten stangenförmigen Werkstoffs haben eine hohle Werkstückspindel, die in einem Spindelstock ortsfest gelagert ist und als Spannmittelträger ein Spannfutter aufweist. Der stangenförmige Werkstoff wird durch diese Werkstückspindel und durch das Spannfutter hindurchgeschoben. In das Spannfutter ist als Spannmittel eine ringförmige Spannzange eingesetzt, die den Werkstoff umschließt und elastisch zusammendrückbar ist, um diesen fest zu spannen.

Solche Spannzangen haben eine kegelförmige Außenfläche, die durch einen auf die Spannzange beispielsweise hydraulisch ausgeübten Druck oder Zug gegen eine komplementäre Innenfläche des Spannfutters gepreßt wird, um die erforderlichen radialen Spannkräfte zu erzeugen. Jede einzelne Spannzange dieser Art ist für Werkstoffstangen oder auch einzeln zuführbare Werkstücke in einem bestimmten Durchmesserbereich geeignet. Wenn Werkstücke bearbeitet werden sollen, deren Durchmesser in einem anderen Bereich liegt, muß die Spannzange gegen eine größere oder kleinere ausgetauscht werden. Austauschbare Spannzangen dieser Art sowie Greifer zum Erfassen solcher Spannzangen und zum Herstellen und Lösen ihrer Befestigung am Spannfutter sind beispielsweise aus der DE 2831140 A1 bekannt.

Es sind auch programmierbare Handhabungssysteme bekannt, mit denen sich Spannmittel an Drehmaschinen automatisch umrüsten lassen. Ein solches Handhabungssystem, das in dem Prospekt "Drehtechnik total" der Firma Georg Fischer, Schaffhausen/Schweiz, 1985, dargestellt ist, hat ein Portal mit einer über der Drehmaschine parallel zu deren Werkstückspindel angeordneten Fahrschiene, an der ein Schlitten zwischen einem Spannmittel-Magazin und der Drehmaschine verfahrbar ist. Am Schlitten ist ein senkrecht verfahrbarer Stößel geführt, der an seinem unteren Ende einen palettenartigen Greifer trägt. Als Spannmittelträger ist an der Werkstückspindel der Drehmaschine ein Backenfutter angeordnet, das mit beispielsweise drei Spannbacken ausgerüstet ist. Der palettenartige Greifer ist dazu ausgebildet, die Spannbacken vom Backenfutter zu lösen und gegen andere Spannbacken auszutauschen.

Um ein solches automatisches Handhabungssystem zum Auswechseln von Spannmitteln bereitzuhalten, ist ein hoher Kosten- und Platzaufwand erforderlich. Dieser Aufwand lohnt sich im allgemeinen nur dann, wenn ständig eine große Anzahl verschiedener Spannmittel bereitgehalten werden muß, damit unterschiedliche Werkstücke in kleinen Losgrößen und somit in rascher Aufeinanderfolge ohne unmittelbare menschliche Einwirkung bearbeitet werden können, beispielsweise in einer mannfreien Nachtschicht. Wenn hingegen an einer Drehmaschine nur wenige verschiedene Spannmittel, beispielsweise Spannzangen oder Sätze von Spannbacken, jeweils für mehrere Stunden benötigt werden, ist der Aufwand für bekannte Handhabungssysteme zum automatischen Wechseln dieser Spannmittel zu groß.

Der Erfindung liegt deshalb die Aufgabe zugrunde, eine Einrichtung zum automatischen Wechseln von Werkstück-Spannmitteln an numerisch gesteuerten Drehmaschinen derart zu gestalten, daß sie sich mit verhältnismäßig geringem Kostenaufwand herstellen läßt und wenig Platz beansprucht.

Die Aufgabe ist erfindungsgemäß bei einer Einrichtung der eingangs beschriebenen Gattung dadurch gelöst, daß
- das Spannmittel-Magazin einen Standort im Arbeitsbereich des Kreuzschlittensystems hat und
- alle für den Transport der Spannmittel von diesem Standort zum Spannmittelträger und umgekehrt erforderlichen Bewegungen vom Kreuzschlittensystem ausführbar sind.

Eine Drehmaschine, bei der sich die Erfindung in mehreren Ausgestaltungen anwenden läßt, ist beispielsweise aus der DE 3320940 A1 bekannt. Die Maschine hat einen Spindelstock, in dem eine erste Werkstückspindel gelagert ist.

Parallel zu der Werkstückspindel, also in einer Richtung, die üblicherweise als Z-Achse bezeichnet wird, erstrecken sich zwei Z-Führungen, auf denen je ein Z-Schlitten ver schiebbar geführt ist. Jeder der beiden Z-Schlitten bildet zusammen mit einem auf ihm rechtwinklig zur Z-Achse, längs der sogenannten X-Achse verschiebbar geführten X-Schlitten ein Kreuzschlittensystem. Auf dem X-Schlitten eines dieser beiden Kreuzschlittensysteme ist ein erster Revolver mit in Richtung der Z-Achse angeordneter Drehachse gelagert. Auf dem X-Schlitten des anderen Kreuzschlittensystems ist eine zweite Werkstückspindel gelagert, die sich ebenfalls in Richtung der Z-Achse erstreckt. Neben dem Spindelstock ist in einem Gehäuse, das ortsfest angeordnet oder längs einer Y-Achse im rechten Winkel zur Z-Achse und zur X-Achse verstellbar sein kann, ein zweiter Revolver gelagert, dessen Drehachse sich ebenfalls in Richtung der Z-Achse erstreckt. Der erste Revolver ist mit mehreren an ihm angeordneten Werkzeugen dazu vorgesehen, die Vorderseite jeweils eines Werkstücks zu bearbeiten, das in der ersten Werkstückspindel eingespannt ist. Die zweite Werkstückspindel ist dazu vorgesehen, jeweils ein an seiner Vorderseite bearbeitetes Werkstück von der ersten Werkstückspindel zu übernehmen, damit das Werkstück an seiner Rückseite von Werkzeugen am zweiten Revolver bearbeitet werden kann. ·

Zum automatischen Wechseln von Werkstück-Spannmitteln an einer Werkstückspindel, die in einem Spindelstock gelagert ist, kann die erfindungsgemäße Einrichtung ein am Spindelstock angeordnetes Spannmittel-Magazin aufweisen. Das Spannmittel-Magazin kann aber auch an einem Kreuzschlittensystem angeordnet sein. Es ist auch möglich, daß am Spindelstock und an einem Kreuzschlittensystem je ein Spannmittel-Magazin angeordnet ist.

Eine weitere Anwendungsmöglichkeit der Erfindung besteht bei einer Drehmaschine mit
- einem Spindelstock, in dem eine Werkstückspindel gelagert ist,
- einem Revolver, der um eine quer zur Werkstückspindel angeordnete Achse schaltbar an einem Kreuzschlittensystem gelagert ist,
- einer am Revolver gelagerten zusätzlichen Werkstückspindel und
- einer Rückseiten-Bearbeitungsvorrichtung, die vom Spindelstock aus gesehen jenseits des Kreuzschlittensystems angeordnet ist.

Bei einer solchen Drehmaschine kann das Spannmittel-Magazin jenseits des Kreuzschlittensystems angeordnet sein. Auch eine Anordnung des Spannmittel-Magazins an anderer Stelle des Arbeitsbereichs ist möglich.

In jedem Fall ist es zweckmäßig, wenn das Spannmittel-Magazin einen Deckel hat, der automatisch wegbewegbar ist, um das Spannmittel-Magazin freizugeben. Dadurch wird das Spannmittel-Magazin normalerweise vor Verschmutzung geschützt und nur für Rüstzeiten, während derer keine Werkstückbearbeitung stattfindet, freigegeben.

Wenn das Spannmittel-Magazin an einem Spindelstock oder einer Rückseiten-Bearbeitungsvorrichtung angeordnet ist, dann ist es zweckmäßig, daß das Spannmittel-Magazin in Richtung der Z-Achse ausfahrbar ist. Dadurch läßt sich das Spannmittel-Magazin aus einer Ruhestellung, in der es kollisionssicher untergebracht ist, vorübergehend in eine Stellung bringen, in der es für den Wechsel eines oder mehrerer Spannmittel gut zugänglich ist.

Alternativ oder zusätzlich kann der mindestens eine Greifer, der zum Erfassen eines Spannmittels und zum Herstellen und Lösen seiner Befestigung am Spannmittelträger vorgesehen ist, in Richtung der Z-Achse teleskopartig aus fahrbar an einem Tragkörper geführt sein, der am Kreuzschlittensystem befestigt ist.

Dabei ist es zweckmäßig, wenn der Greifer eine Rast aufweist, in die ein Halteelement einrastbar ist, um durch eine Relativverschiebung zwischen Tragkörper und Halteelement ein Aus- oder Einfahren des Greifers zu bewirken. Auf diese Weise läßt sich ein eigener Antrieb für Bewegungen des Greifers in Richtung der Z-Achse entbehren.

Die letztgenannte Ausführungsform der Erfindung kann in der Weise ausgestaltet sein, daß die Rast an einem Riegel ausgebildet ist, der in X-Richtung verschiebbar am Tragkörper geführt, in Richtung auf eine Sperrstellung vorgespannt und durch Einwirkung des Halteelements auf die Rast in eine Lösestellung verschiebbar ist.

Eine Beweglichkeit des Greifers in Bezug auf das Spannmittel-Magazin kann entbehrlich sein, wenn die Werkstückspindel, an der ein Spannmittel gewechselt werden soll, selber in bezug auf das Spannmittel-Magazin beweglich ist. Dies ist beispielsweise dann der Fall, wenn ein am Spindelstock angeordnetes Spannmittel-Magazin zum Aufbewahren von Spannmitteln ausgebildet ist, die zu einer Werkstückspindel an einem Kreuzschlittensystem gehören. In einem solchen Fall ist es zweckmäßig, wenn das Spannmittel-Magazin für jedes aufzubewahrende Spannmittel einen Greifer aufweist, der zum Herstellen und Lösen der Befestigung des Spannmittels an der zugehörigen Werkstückspindel sowie zum Festhalten des Spannmittels im Spannmittel-Magazin ausgebildet ist.

Mit besonderem Vorteil läßt sich die erfindungsgemäße Einrichtung in ihren verschiedenen Ausgestaltungen bei Drehmaschinen anwenden, bei denen jede Werkstückspindel, an der ein Spannmittelträger befestigt ist, C-achsengesteuert ist.

Eine solche Steuerung ermöglicht es, die betreffende Werkstückspindel in beliebigen, definierten Drehwinkelstellungen anzuhalten, die zum Erfassen bekannter Spannmittel erforderlich oder besonders geeignet sind.

Ausführungsbeispiele werden im folgenden mit weiteren Einzelheiten der Erfindung anhand schematischer Zeichnungen näher erläutert. Es zeigen:

Fig. 1 eine Schrägansicht einer CNC-Drehmaschine mit einer ersten Ausführungsform einer erfindungsgemäßen Einrichtung,

Fig. 2 einzelne Baugruppen des Drehautomaten von vorne, teilweise im Längsschnitt,

Fig. 3 den Schnitt III-III in Fig. 2,

Fig. 4a und 4b den vergößerten Ausschnitt IV aus Fig. 2 in zwei verschiedenen Arbeitsstellungen,

Fig. 5 ein Bauteil aus Fig. 4a und 4b in weiter vergrößerter Schrägansicht,

Fig. 6 den vergrößerten Ausschnitt VI in Fig. 2,

Fig. 7 die Schrägansicht in Richtung des Pfeils VII in Fig. 6,

Fig. 8a bis 8d Baugruppen aus Fig. 2 in vier aufeinanderfolgenden Stellungen,

Fig. 9 eine Alternative zu Fig. 4a in Schrägansicht,

Fig.10a bis 10d eine Baugruppe aus Fig. 9 in vier aufeinanderfolgenden Stellungen,

Fig.11 eine Schrägansicht einer weiteren CNC-Drehmaschine mit einer zweiten Ausführungsform einer erfindungsgemäßen Einrichtung,

Fig.12 die vergrößerte Schrägansicht XII in Fig. 11,

Fig.13 den weiter vergrößerten Teilschnitt XIII-XIII in Fig.12,

Fig.14 die Ansicht XIV in Fig.13,

Fig.15 die Ansicht XV in Fig.11,

Fig.16 die Ansicht XVI in Fig.15,

Fig.17 den Schnitt XVII-XVII in Fig.16,

Fig.18a u. 18b den Schnitt XVIII-XVIII ohne bzw. mit Spannmittel.

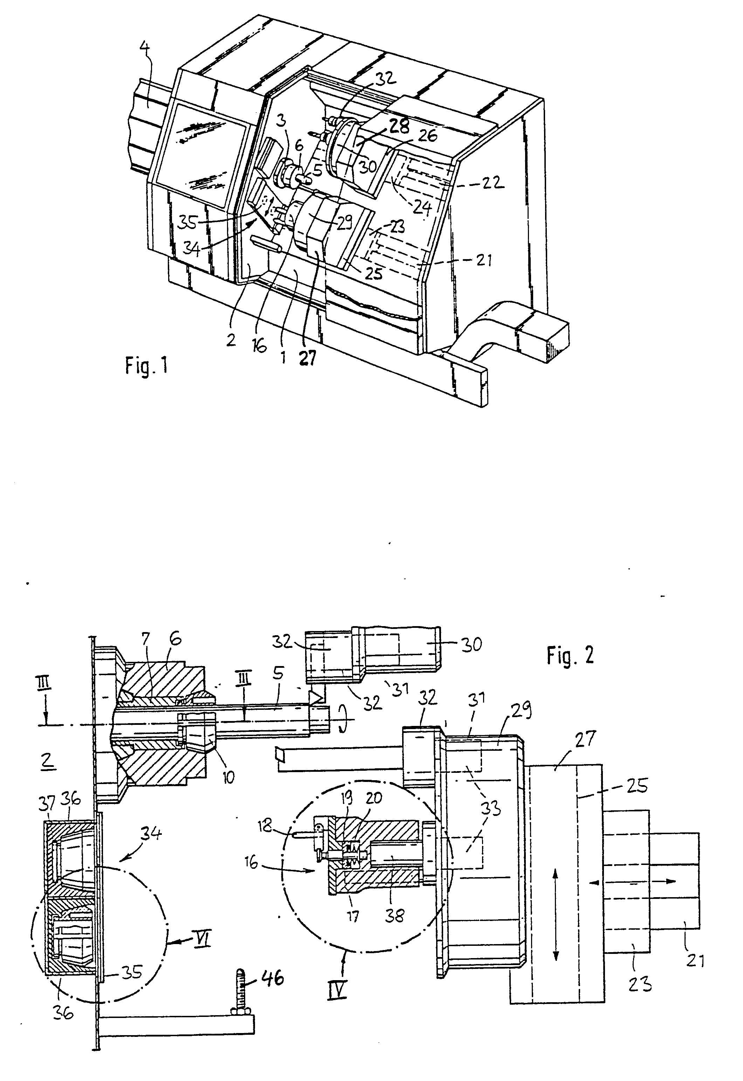

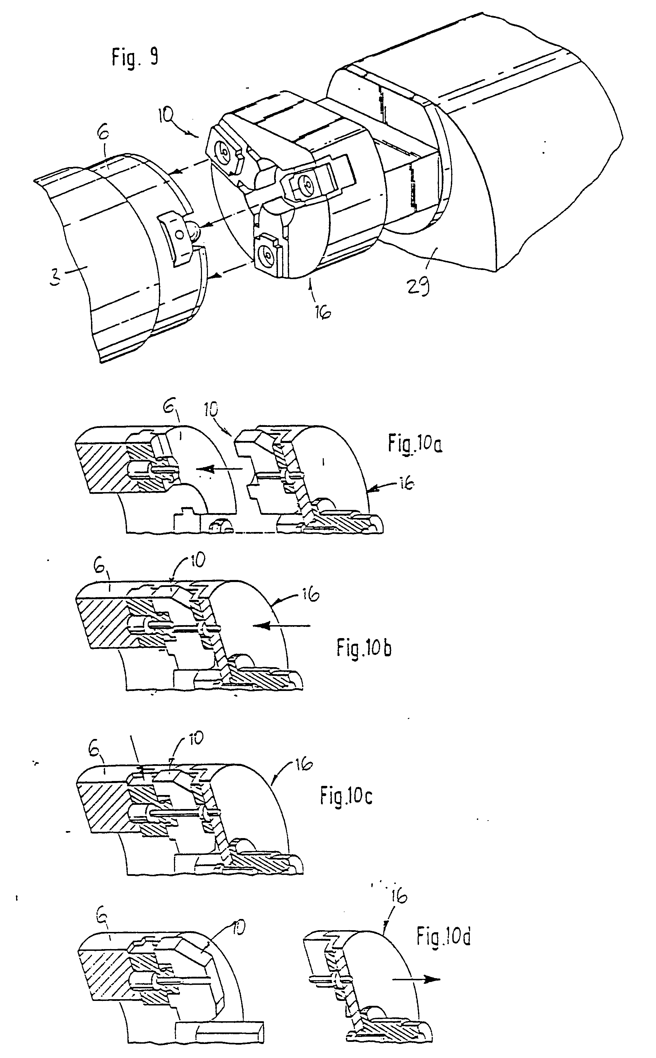

Die in Fig. 1 bis 8d - und mit einer Variante in Fig. 9 bis 10d dargestellte Drehmaschine hat ein Schrägbett 1 mit daran befestigtem Spindelstock 2, in dem eine hohle Werkstückspindel 3 gelagert ist. Die Werkstückspindel 3, deren Achsrichtung im folgenden als Z-Achse bezeichnet wird, ist mittels eines nichtdargestellten Antriebs C-achsengesteuert antreibbar; ihre Drehbewegung läßt sich also auf andere Bewegungen der Drehmaschine in programmierbarer Weise abstimmen und in beliebigen Drehwinkelstellungen stillsetzen.

Gemäß Fig. 1 ist der Werkstückspindel 3 ein hinter ihr angeordneter Stangenlader 4 zugeordnet, der stangenförmige Werkstücke 5 selbsttätig durch die Werkstückspindel 3 und einen an deren vorderem Ende befestigten Spannmittelträger 6 hindurchschiebt. Der Spannmittelträger 6 ist gemäß Fig. 1 bis 8d als Spannfutter ausgebildet und enthält eine Spannhülse 7, die mittels eines Rohrs 8 axial verschiebbar ist. Am Spannmittelträger 6 ist ein Innenkonus 9 ausgebildet, an dem ein Spannmittel 10 in Gestalt einer entsprechend konischen Spannzange bekannter Bauart zentriert ist. Dieses Spannmittel 10 ist in drei gleiche Sektoren 11 unterteilt, die durch anvulkanisierte Zwischenschichten 12 aus Gummi miteinander verbunden sind und je ein achsparalleles Sackloch 13 sowie je einen Abschnitt eines Kragens 14 aufweisen, der in einer Ringnut 15 der Spannhülse 7 aufgenommen ist.

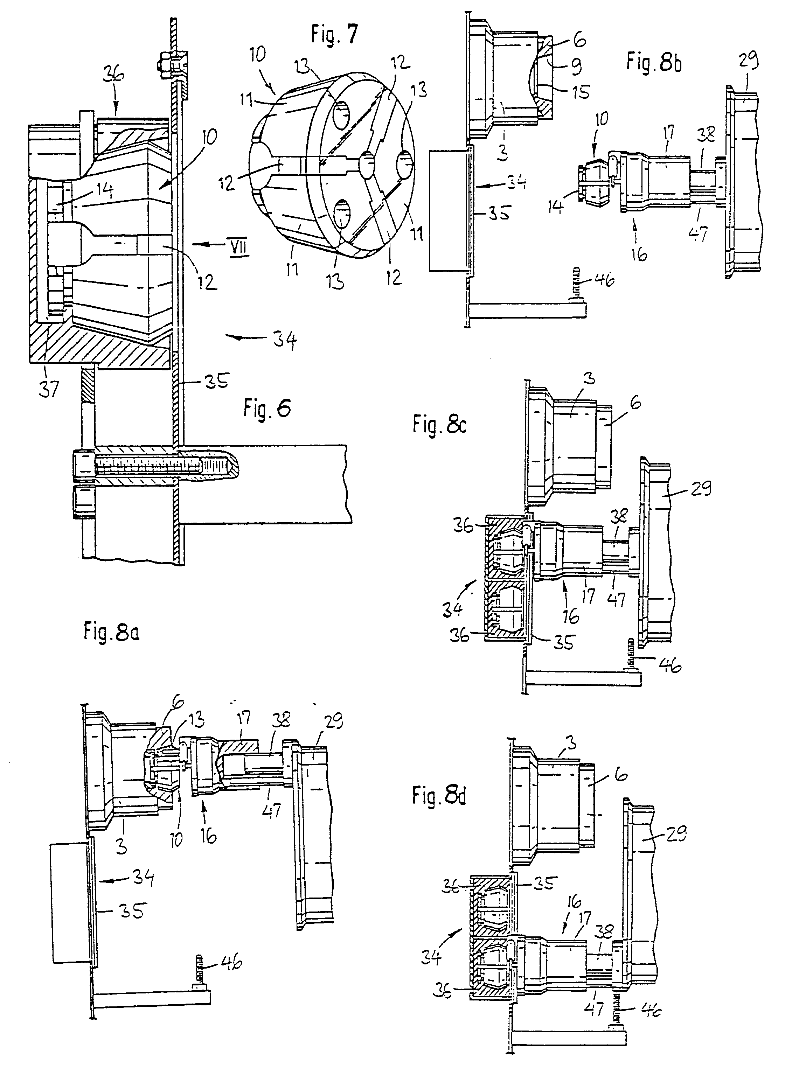

Das Spannmittel 10 hat einen Innendurchmesser, der dem Außendurchmesser des zu spannenden Werkstücks 5 ungefähr angepaßt ist. Für Werkstücke 5 mit erheblich kleinerem Außendurchmesser ist ein äußerlich gleiches Spannmittel 10 mit entsprechend kleinerem Innendurchmesser vorgesehen, das vor allem in Fig. 6 und 7 dargestellt ist.

Zum Austauschen der beiden dargestellten Spannmittel 10 ist ein Greifer 16 von ebenfalls bekannter Bauart vorgesehen, der ein Greifergehäuse 17 mit drei daran gelagerten Stiften 18 aufweist. Die drei Stifte 18 passen in die drei Sacklöcher 13 jedes der gegeneinander auszutauschenden Spannmittel 10. Das Greifergehäuse 17 ist symmetrisch in Bezug auf die Z-Achse gestaltet. Jeder der Stifte 18 ist um eine zur Z-Achse normale Achse schwenkbar und ist gelenkig mit einem im Greifergehäuse 17 angeordneten Kolben 19 verbunden, der gegen den Widerstand einer Rückstellfeder 20 hydraulisch derart verstellbar ist, daß die drei Stifte 18 zueinander hin geschwenkt werden.

Die Drehmaschine hat gemäß Fig. 1 zwei Z-Schlittenführungen 21 und 22, die schräg übereinander angeordnet sind, sich in Richtung der Z-Achse erstrecken und einen unteren Z-Schlitten 23 bzw. einen oberen Z-Schlitten 24 führen. Jeder der beiden Z-Schlitten 23 und 24 trägt eine X-Schlittenführung 25 bzw. 26, die sich im rechten Winkel zur Z-Achse erstreckt und einen unteren X-Schlitten 27 bzw. einen oberen X-Schlitten 28 führt. Jedes der beiden auf diese Weise gebildeten Kreuzschlittensysteme 23, 27 und 24, 28 trägt einen Revolver 29 bzw. 30.

Die beiden Revolver 29 und 30 sind der Übersichtlichkeit halber als Trommelrevolver dargestellt, die um je eine zur Z-Achse parallele Achse drehbar sind und je eine Anzahl zu der betreffenden Drehachse parallele Bohrungen 31 aufweisen, in denen sich Werkzeughalter 32 mit je einem an ihnen ausgebildeten Schaft 33 befestigen lassen. Insoweit ist die dargestellte Drehmaschine von üblicher Bauart.

Eine Besonderheit besteht darin, daß die Drehmaschine selbst ein Spannmittel-Magazin 34 für mindestens ein zeit weise nicht benötigtes Spannmittel 10 aufweist. Ein solches Spannmittel-Magazin 34 ist gemäß Fig. 1, 2, 6 und 8a bis 8d am Spindelstock 2 neben und etwas unterhalb der Werkstückspindel 3 angeordnet. Dieses Spannmittel-Magazin 34 hat einen normalerweise geschlossenen Deckel 35, der in X-Richtung verschiebbar ist und in geöffnetem Zustand zwei Halterungen 36 für je ein Spannmittel 10 freigibt. Jede der Halterungen 36 hat eine zur äußeren Form der Spannmittel 10 komplementäre Innenform, die derjenigen des Spannmittelträgers 6 im wesentlichen entspricht und vor allem eine innere Ringnut 37 aufweist, in die der Kragen 14 des aufzubewahrenden Spannmittels 10 einrastbar ist.

Zum Umsetzen je eines Spannmittels 10 von der Werkstückspindel 3 zum Spannmittel-Magazin 34 und umgekehrt ist der beschriebene Greifer 16 teleskopartig ausfahrbar an einem Tragkörper 38 angeordnet, der am unteren Revolver 29 befestigt ist. Der Träger 38 erstreckt sich in Z-Richtung und hat einen Schlitz 39, der sich in gleicher Richtung erstreckt und an seinen beiden Enden je eine zylindrische Erweiterung 40 bzw. 41 aufweist. Im Greifergehäuse 17 ist in X-Richtung verschiebbar ein zylindrischer Riegel 42 geführt, der an einem Ende einen Zapfen 43 aufweist und an seinem anderen Ende von einer Feder 44 derart belastet ist, daß er bestrebt ist, die in Fig. 4a und 4b abgebildete Stellung einzunehmen, in der das freie Ende des Zapfens 43 ungefähr bündig mit einer Außenfläche des Greifergehäuses 17 ist. An diesem Ende des Zapfens 43 ist eine Rast 45 in Form einer konischen Vertiefung ausgebildet, in die ein Halteelement 46 einrastbar ist. Das Halteelement 46 ist in Fig. 2 und 8a bis 8d als ortsfester Bolzen dargestellt, der sich in X-Richtung erstreckt. Bei der Darstellung in Fig. 4a und 4b ist vorgesehen, daß der Riegel 42 von einem am oberen Revolver 30 befestigten Halteelement betätigbar ist.

Durch den Tragkörper 38 und das Greifergehäuse 17 erstreckt sich eine Fluidleitung 47 hindurch, durch die sich ein Reinigungsfluid zuführen läßt, beispielsweise eine Emulsion, wie sie auch zum Kühlen von Schneidwerkzeugen verwendet wird. Die Fluidleitung 47 speist Düsen in der Stirnwand des Greifergehäuses 17, die dem Spindelstock 2 zugewandt ist. Mit diesen Düsen lassen sich Verunreinigungen aus den Spannmitteln 10 und zugehörigen Bauteilen herausspülen.

Der Greifer 16 nimmt während des normalen Arbeitens der Drehmaschine seine in Fig. 4a abgebildete Ruhestellung ein, in der er möglichst wenig weit von dem ihn tragenden unteren Revolver 29 weg in Richtung zum Spindelstock 2 vorsteht. In der Ruhestellung ist der Riegel 42 in die in Fig. 4 und 5 rechte Erweiterung 41 des Schlitzes 39 eingerastet, so daß er ein versehentliches Ausfahren des Greifers 16 verhindert. Zum Entriegeln des Greifers 16 wird der zugehörige Revolver 29 in eine programmierte Stellung gebracht, in welcher der Zapfen 43 mit dem Halteelement 46 fluchtet. Dann wird der untere X-Schlitten 29 so verfahren, daß das Halteelement 46 in die Rast 45 einrastet und den Riegel 42 in das Greifergehäuse 17 hineindrückt und dieses entriegelt.

Jetzt greift nur noch der Zapfen 43, der erheblich schlanker ist als der Riegel 42 selbst, in die Erweiterung 41. Gleichzeitig ist das Greifergehäuse 17 durch das Halteelement 46 derart festgehalten, daß es sich nicht mehr in Z-Richtung verschieben läßt. Wird nun der untere Z-Schlitten 23 in Richtung vom Spindelstock 2 weg bewegt, bleibt der Greifer 16 stehen, so daß er in bezug auf den Tragkörper 38 ausgefahren wird. Diese Relativbewegung in Z-Richtung wird beendet, sobald der Riegel 42 die Erweiterung 40 am in Fig. 4 und 5 linken Ende des Schlitzes 39 erreicht hat. Dann wird der untere X-Schlitten 27 in Richtung vom Halteelement 46 weg bewegt, so daß der Riegel 42 von der Feder 44 rückgestellt wird und in die Erweiterung 40 einrastet.

Der Revolver 29 mit dem auf diese Weise gegen unbeabsichtigtes Einfahren gesicherten Greifer 16 wird nun in eine Stellung gebracht, in der einer der Stifte 18 gegen einen Rand des Deckels 35 stößt; dieser wird durch Verfahren des X-Schlittens 27 geöffnet. Anschließend wird das Kreuzschlittensystem 23, 27 so bewegt, daß der Greifer 16 der Werkstückspindel 3 gegenübersteht. Diese steht in einer Drehwinkelstellung, in der die drei Sacklöcher 13 des an ihr befestigten Spannmittels 10 mit je einem Stift 18 des Greifers 16 fluchten. Nun wird der untere Z-Schlitten 23 in Richtung zur Werkstückspindel 3 hin verschoben, so daß die drei Stifte 18 in je eines der Sacklöcher 13 eingreifen. Anschließend wird der Kolben 19 gegen die Kraft der Rückstellfeder 20 verstellt, so daß die drei Stifte 18 zueinander hin geschwenkt werden und dadurch das bisher am Spannmittelträger 6 befestigte Spannmittel 10 soweit zusammendrücken, bis dessen Kragen 14 sich von der Ringnut 15 löst und das Spannmittel 10 durch Verfahren des Z-Schlittens 23 aus dem Spannmittelträger 6 herausbewegt werden kann.

Anschließend wird der Revolver 29 derart gedreht und/oder das Kreuzschlittensystem 23, 27 derart bewegt, daß der Greifer 16 gemäß Fig. 8b mit einer bisher freien Halterung 36 des Spannmittel-Magazins 34 fluchtet. Durch Verfahren des Z-Schlittens 23 wird das am Greifer 16 festgehaltene Spannmittel 10 in die freie Halterung 36 eingesetzt und der Kolben 19 drucklos gemacht, so daß der Kragen 14 gemäß Fig. 8c in die Ringnut 37 einrastet. Dann wird der Z-Schlitten 23 ein Stück weit vom Spindelstock 2 weg verstellt und anschließend wird durch Drehen des Revolvers 29 und nötigenfalls zusätzlich durch Verschieben des X-Schlittens 27 eine Stellung erreicht, in welcher der Greifer 16 mit der zweiten Halterung 36 des Spannmittel Magazins 34 fluchtet, in der ein Spannmittel 10 zum Austauschen bereitgehalten wird.. Dieses Spannmittel 10 wird gemäß Fig. 8d vom Greifer 16 erfaßt, aus seiner Halterung 36 herausgezogen, zur Werkstückspindel 3 transportiert und in deren Spannmittelträger 6 eingesetzt.

Anschließend kehrt der Greifer 16 zum Spannmittel-Magazin zurück und schließt dessen Deckel 35. Schließlich wird der Greifer 16 wieder in die Stellung gebracht, in der das Halteelement 46 in die Rast 45 eingreift und den Riegel 42 aus der Erweiterung 40 löst. Nun wird der Z-Schlitten 23 zum Spindelstock 2 hin verschoben, wodurch der Greifer 16 auf seinem Tragkörper 38 eingefahren wird, bis der Riegel 42 schließlich in die Erweiterung 41 einrastet. Der Greifer 16 nimmt nun wieder seine Ruhestellung ein, in der er nur etwa in gleichem Maß wie irgend ein Werkzeug am Revolver 29 bei der Programmierung berücksichtigt werden muß, damit Kollisionen bei der Werkstückbearbeitung vermieden werden.

Falls am Revolver 29 oder auch am Revolver 30 oder sonst irgendwo an einem der beschriebenen Kreuzschlittensysteme Platz für mindestens einen weiteren Greifer 16 frei ist, kann dieser zusammen mit dem beschrieben Greifer 16 als Spannmittel-Magazin verwendet werden, das ein am Spindelstock 2 angeordnetes Spannmittel-Magazin entbehrlich macht. In einem solchen Fall ist jeder einzelne Greifer 16 ständig nur einem einzigen der insgesamt mindestens zwei Spannmittel 10 zugeordnet und jedes dieser Spannmittel bleibt am zugehörigen Greifer festgehalten, solange es nicht gebraucht wird.

Als Beispiel dafür, daß das Spannmittel 10 nicht unbedingt, wie in Fig. 1 bis 8d dargestellt, die Form einer Spannzange haben muß, ist in Fig. 9 bis 10d eine Variante dargestellt, bei der als Spannmittelträger 6 ein Dreibackenfutter vorgesehen ist und jedes Spannmittel 10 dem entsprechend aus einem Satz von drei Spannbacken 49 besteht. Zum Austauschen dieser Spannmittel 10 ist wiederum ein Greifer 16 vorgesehen, der hier jedoch palettenartig gestaltet ist. Solche Spannmittel 10 und Greifer 16 sind bekannt, beispielsweise aus dem eingangs genannten Prospekt "NC-Backenwechsler von +GF+". Der Backenwechsel ist übereinstimmend mit jenem Prospekt in Fig. 10a bis 10d dargestellt und ist wegen seiner Bekanntheit nicht näher erläuterungsbedürftig.

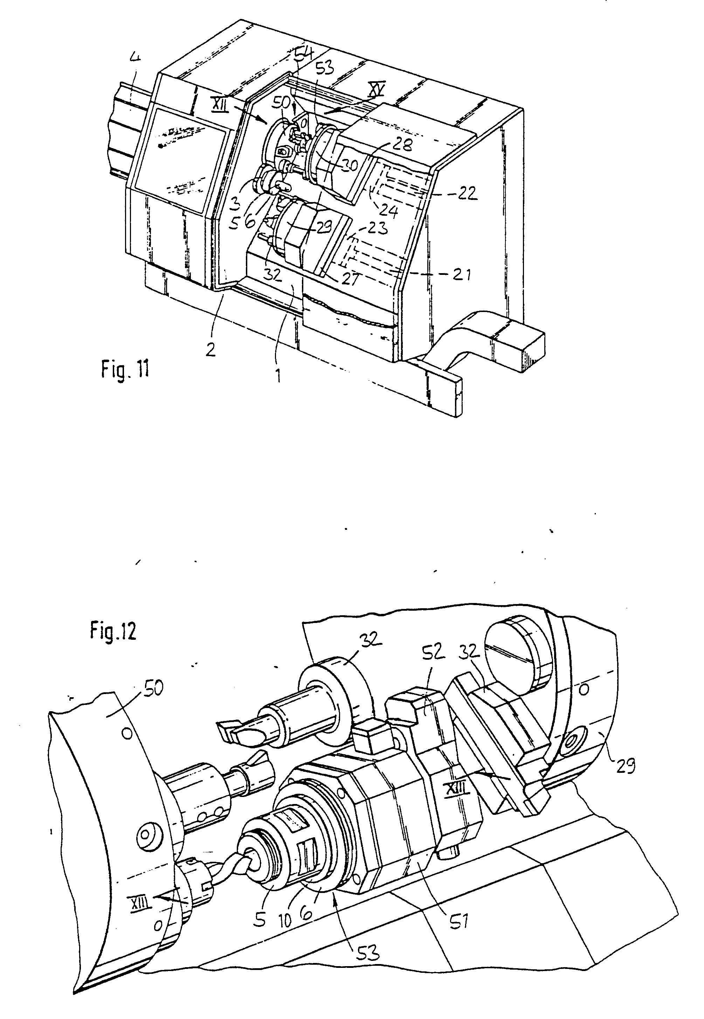

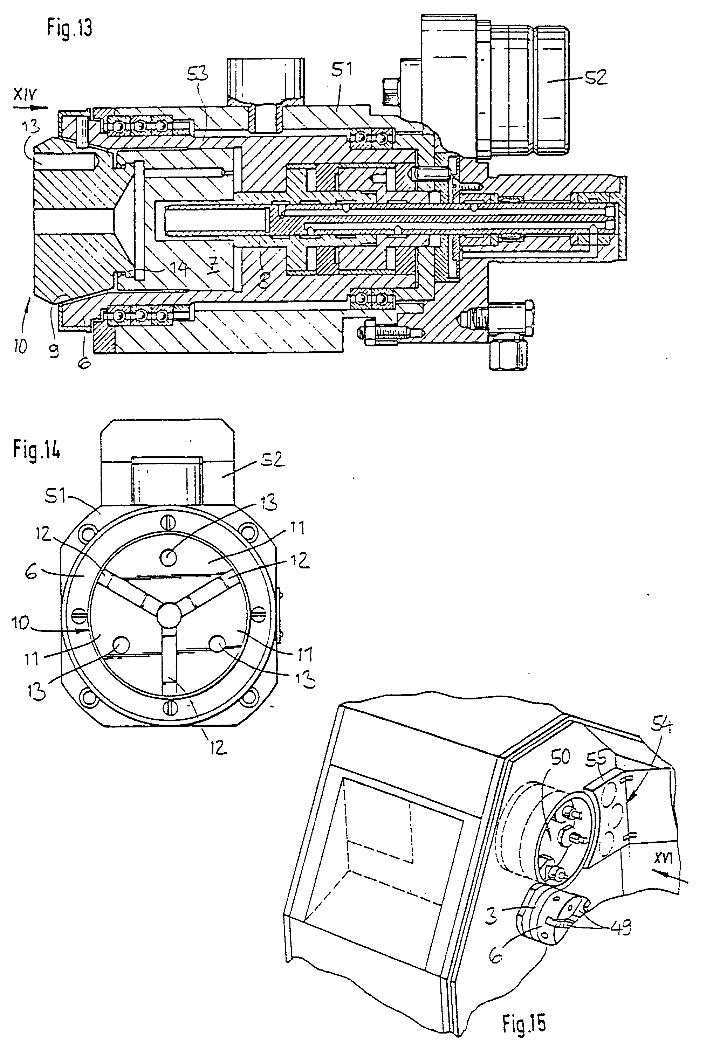

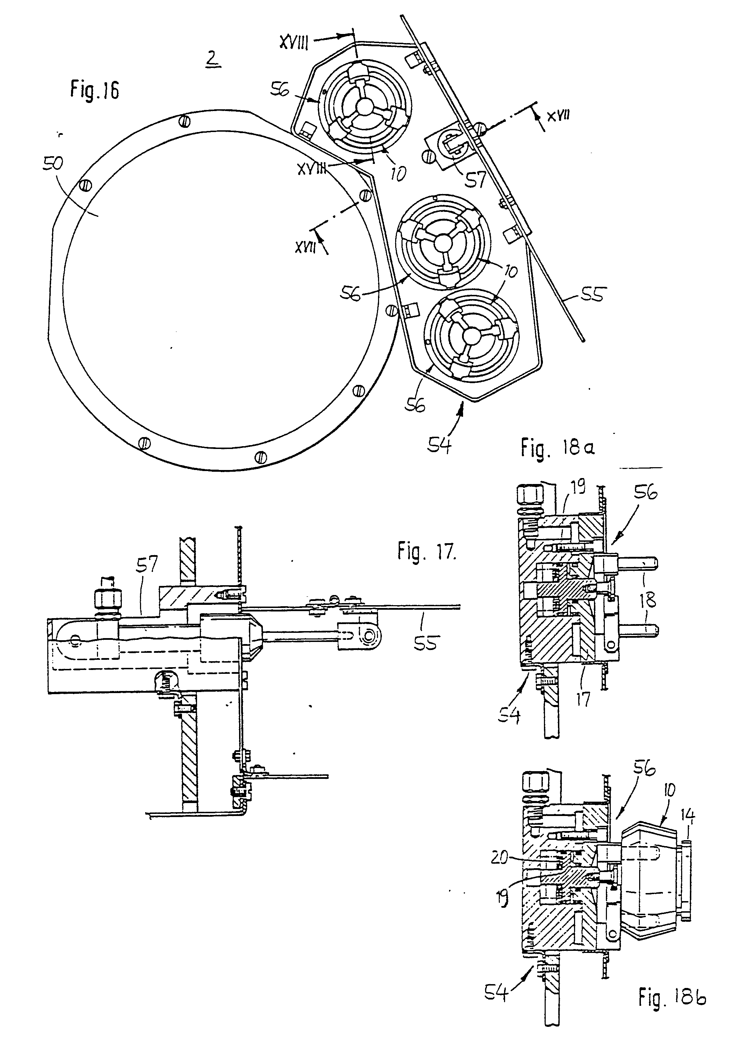

Die in Fig. 11 bis 18b dargestellte Drehmaschine hat zusätzlich zu den bisher beschriebenen beiden Revolvern 29 und 30, die an je einem Kreuzschlittensystem 23, 27 bzw. 24, 28 angeordnet sind, einen Revolver 50, der am Spindelstock 2 angeordnet ist. Dieser Revolver 50 ist aus seiner in Fig. 11 und 12 abgebildeten Arbeitsstellung, die er zum rückseitigen Bearbeiten eines Werkstücks 5 einnimmt, in Richtung der Z-Achse in eine Ruhestellung einfahrbar, in der er in Fig. 15 abgebildet ist.

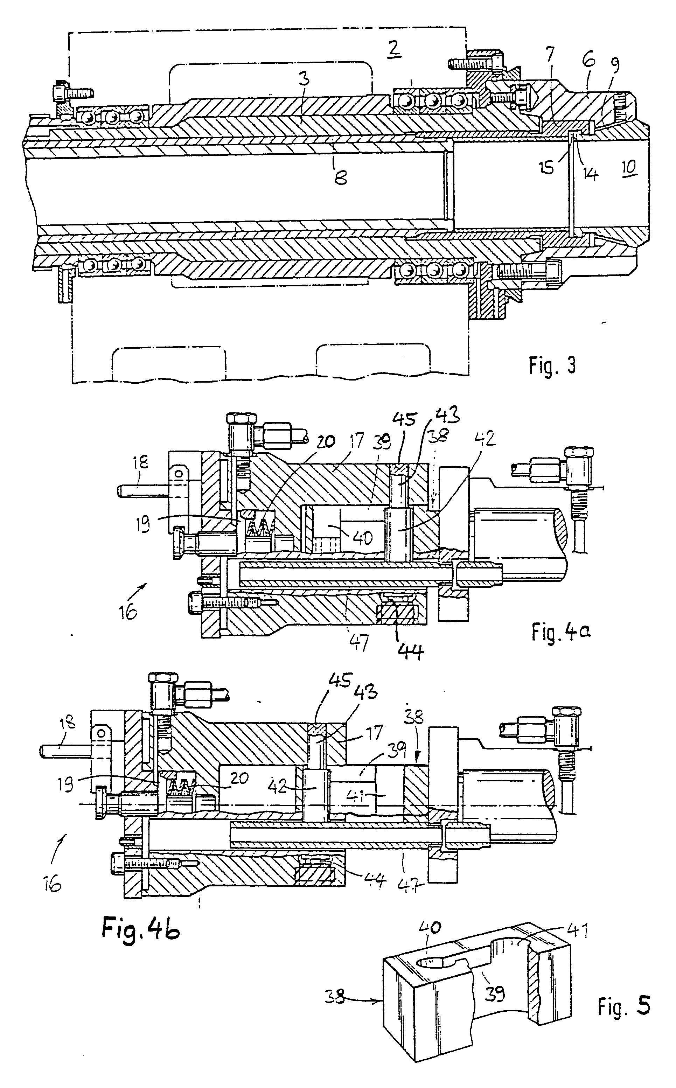

Für die Rückseitenbearbeitung der Werkstücke 5 ist am oberen Revolver 30 ein Spindelgehäuse 51 befestigt. Dieses trägt einen C-achsengesteuerten Antrieb 52 für eine im Spindelgehäuse 51 gelagerte Werkstückspindel 53, die sich in Z-Richtung erstreckt. An der Werkstückspindel 53 ist ein Spannmittelträger 6 befestigt, der dem in Fig. 3 besonders deutlich dargestellten entspricht und wie dieser eine Spannhülse 7, die mittels eines Rohrs 8 axial verstellbar ist, und einen Innenkonus 9 als Anlagefläche für ein Spannmittel 10 aufweist. Das Spannmittel 10 ist wiederum eine Spannzange der in Fig. 1 bis 8d dargestellten Art.

Der zusätzlichen Werkstückspindel 53 ist ein Spannmittel-Magazin 54 zugeordnet, das eine entsprechende Funktion hat wie das Spannmittel-Magazin 34 in Fig. 1 bis 8d, und das wie dieses am Spindelstock 2 angeordnet ist. Im Unter schied zum Spannmittel-Magazin 34 hat das Spannmittel-Magazin 54 einen schwenkbaren Deckel 55 und enthält für jedes Spannmittel 10, das im Spannmittel-Magazin 54 aufbewahrt werden soll, einen fest eingebauten Greifer 56. Jeder der Greifer 56 entspricht im übrigen dem Greifer 16, weshalb seine Einzelteile mit gleichen Bezugszeichen versehen sind wie die Einzelteile des Greifers 16. Zum Öffnen des Deckels 55 ist eine hydraulische Kolbenzylindereinheit 57 vorgesehen.

## Ansprüche

1. Einrichtung zum automatischen Wechseln von Werkstück-Spannmitteln (10) an numerisch gesteuerten Drehmaschinen mit

- mindestens einer Werkstückspindel (3; 53), der ein Spannmittelträger (6) dauerhaft zugeordnet ist,
- mindestens zwei Spannmitteln (10), die für Werkstücke (5) unterschiedlicher Größe vorgesehen und einander abwechselnd am Spannmittelträger (6) zu befestigen sind,
- einem Spannmittel-Magazin (34; 54) zum Aufbewahren mindestens eines nicht benutzten Spannmittels (10),
- mindestens einem Kreuzschlittensystem (23, 27) mit einem in Richtung der Werkstückspindel (3; 53) verfahrbaren Z-Schlitten (23) und mindestens einem quer dazu verfahrbaren X-Schlitten (27),
- Schlittenführungen (21, 25), die einen Arbeitsbereich des Kreuzschlittensystems (23, 27) definieren, und

- mindestens einem Greifer (16; 56) zum Erfassen eines Spannmittels (10) und zum Herstellen und Lösen seiner Befestigung am Spannmittelträger (6),

dadurch **gekennzeichnet,** daß - das Spannmittel-Magazin (34; 54) einen Standort im Arbeitsbereich des Kreuzschlittensystems (23, 27) hat und

- alle für den Transport der Spannmittel (10) von diesem Standort zum Spannmittelträger (6) und umgekehrt erforderlichen Bewegungen vom Kreuzschlittensystem (23, 27) ausführbar sind.

2. Einrichtung nach Anspruch 1 bei einer Drehmaschine mit einem Spindelstock (2), in dem eine Werkstückspindel (3) gelagert ist,

dadurch **gekennzeichnet,** daß das Spannmittel-Magazin (34; 54) am Spindelstock (2) angeordnet ist.

3. Einrichtung nach Anspruch 1,

dadurch **gekennzeichnet,** daß das Spannmittel-Magazin (34; 54) an einem Kreuzschlittensystem (23, 27) angeordnet ist.

4. Einrichtung nach Anspruch 1 bei einer Drehmaschine mit

- einem Spindelstock (2), in dem eine Werkstückspindel (3) gelagert ist,

- einem Revolver, der um eine quer zur Werkstückspindel (3) angeordnete Achse schaltbar an einem Kreuzschlittensystem (23, 27) gelagert ist,

- einer am Revolver gelagerten zusätzlichen Werkstückspindel und

- einer Rückseiten-Bearbeitungsvorrichtung, die vom Spindelstock (2) aus gesehen jenseits des Kreuzschlittensystems (23, 27) angeordnet ist,

dadurch **gekennzeichnet,** daß das Spannmittel-Magazin (34; 54) jenseits des Kreuzschlittensystems (23, 27) angeordnet ist.

5. Einrichtung nach einem der Ansprüche 1 bis 4,

dadurch **gekennzeichnet,** daß das Spannmittel-Magazin (34; 54) einen Deckel (35; 55) hat, der automatisch wegbewegbar ist, um das Spannmittel-Magazin freizugeben.

6. Einrichtung nach Anspruch 2 oder 4,

dadurch **gekennzeichnet,** daß das Spannmittel-Magazin (34; 54) in Richtung der Z-Achse ausfahrbar ist.

7. Einrichtung nach einem Ansprüche 1 bis 6,

dadurch **gekennzeichnet,** daß der Greifer (16) in Richtung der Z-Achse teleskopartig ausfahrbar an einem Trggkörper (38) geführt ist, der am Kreuzschlittensystem (23, 27) befestigt ist.

8. Einrichtung nach Anspruch 7,

dadurch **gekennzeichnet,** daß der Greifer (16) eine Rast (45) aufweist, in die ein Halteelement (46) einrastbar ist, um durch eine Relativverschiebung zwischen Tragkörper (38) und Haltelement (46) ein Aus- oder Einfahren des Greifers (16) zu bewirken.

9. Einrichtung nach Anspruch 8,

dadurch **gekennzeichnet,** daß die Rast (45) an einem Riegel (42) ausgebildet ist, der in X-Richtung verschiebbar im Tragkörper (38) geführt, in Richtung auf eine Sperrstellung vorgespannt und durch Einwirkung des Halteelements (46) auf die Rast (45) in eine Lösestellung verschiebbar ist.

10. Einrichtung nach einem der Ansprüche 1 bis 9,

dadurch **gekennzeichnet,** daß das Spannmittel-Magazin (54) für jedes aufzubewahrende Spannmittel (10) einen Greifer (56) aufweist, der zum Herstellen und Lösen der Befestigung des Spannmittels (10) an der zugehörigen Werkstückspindel (53) sowie zum Festhalten des Spannmittels (10) im Spannmittel-Magazin (54) ausgebildet ist.

11. Einrichtung nach einem der Ansprüche 1 bis 10,

dadurch **gekennzeichnet,** daß jede Werkstückspindel (3; 53), an der ein Spannmittelträger (6) befestigt ist, C-achsengesteuert ist.

Fig. 1

Fig. 2

EP 0 354 540 A2

Fig. 3

Fig. 4a

Fig. 4b

Fig. 5

Fig. 7

Fig. 8b

Fig. 6

Fig. 8c

Fig. 8a

Fig. 8d

Fig. 9

Fig.10a

Fig.10b

Fig.10c

Fig.10d

Fig. 11

Fig. 12

Fig.13

Fig.14

Fig.15

Fig.16

2

Fig. 18a

Fig. 17.

Fig. 18b